# EUROPEAN PATENT SPECIFICATION

(11) **EP 3 242 148 B1**
(45) Date of publication and mention of the grant of the patent: **24.03.2021**
(21) Application number: 17169316.1
(22) Date of filing: 03.05.2017
(51) Int. Cl.: G01V 5/00, H04L 29/06, H04L 29/08

(54) **SECURITY INSPECTION SYSTEM, VIRTUAL SECURITY INSPECTION MACHINE AND METHOD FOR VIRTUAL SECURITY INSPECTION**
SICHERHEITSÜBERPRÜFUNGSSYSTEM, VIRTUELLE ÜBERPRÜFUNGSMASCHINE UND VERFAHREN ZUR VIRTUELLEN SICHERHEITSÜBERPRÜFUNG
SYSTÈME D'INSPECTION DE SÉCURITÉ, MACHINE D'INSPECTION DE SÉCURITÉ VIRTUELLE ET PROCÉDÉ D'INSPECTION DE SÉCURITÉ VIRTUELLE

(30) Priority: 06.05.2016 CN 201610299448
(43) Date of publication of application: 08.11.2017
(73) Proprietor: Nuctech Company Limited, TongFang Building, Shuangqinglu, Haidian District Beijing 100084 (CN)
(72) Inventor: WU, Fan, BEIJING, 100084 (CN); WANG, Tao, BEIJING, 100084 (CN); ZHANG, Yubin, BEIJING, 100084 (CN)
(74) Representative: Cabinet Beau de Loménie

(56) References cited:
- US-A1- 2004 252 024
- US-A1- 2007 280 502
- US-A1- 2009 236 531

## Description

### TECHNICAL FIELD

The present invention relates to the field of security inspection technology, particularly to a virtual security inspection machine, a method for virtual security inspection and a security inspection system using the virtual security inspection machine An example of a security inspection system, comprising a plurality of checkpoints connected to a remote server, is disclosed in US2007280502.

### BACKGROUND

At present, in order to prevent incidents that seriously endanger social public security, such as terrorist activities, drug trafficking and criminals escape or the like, security inspection machines have been widely used at airports, railway stations, bus stations, government buildings, embassies, convention centers, exhibition centers, hotels, shopping malls, large-scale activities, post offices, schools, logistics business, industrial detecting and other places, so as to check the carry-on baggage or verify identities of the people.

In existing security inspection modes, security inspection machines mainly have the following two working modes, i.e., local image judgment and remote image judgment of centralized management. The local image judgment refers to each security inspection machine corresponding to a security inspector, and the security inspector judges whether images acquired by the security inspection machine are suspected, and monitors the working states of the security inspection machine. The remote image judgment of centralized management refers to the images acquired by a group of security inspection machines being randomly assigned to a group of security inspectors in an image judging workstation, and a unified platform is used to manage image distribution and states of the security inspection machine.

When a plurality of departments, such as a security inspection department, an inspection and quarantine department and a customs department or the like, are required to cooperate to judge images, since different departments focus on different images, different departments will come to different conclusions on the image. In the above two work modes, the local image judgment mode cannot share data among a plurality of departments. The remote image judgment mode of centralized management can achieve sharing of data, However, since one security inspection image needs to correspond to a number of image judgment conclusions, and with respect to combinations of different departments, specific custom development needs to be performed and corresponding security inspection process needs to be designed, the modification is complex, and the extensibility is poor.

It should be noted that, the above information disclosed in the BACKGROUND section are merely for enhancing understanding of the background of the present invention, it may not constitute information of the prior art known to the ordinary skilled in the art.

### SUMMARY

The present invention relates to a machine, a system, a method and a computer program as defined in independent claims 1, 6, 13 and 14, respectively. Different embodiments are defined in the dependent claims.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention. The accompanying drawings described hereinafter are merely some embodiments of the present invention, and other drawings are possible to those ordinary skilled in the art without creative work.
Fig. 1 schematically shows a block diagram of a virtual security inspection machine according to exemplary embodiments of the present invention;
Figs. 2A and 2B schematically show topological graphs of a security inspection system according to exemplary embodiments of the present invention;
Fig. 3 schematically shows a structural diagram of a security inspection system according to exemplary embodiments of the present invention;
Fig. 4 schematically shows a structural diagram of a security inspection system according to exemplary embodiments of the present invention;
Fig. 5 schematically shows a structural diagram of a security inspection system according to exemplary embodiments of the present invention;
Fig. 6 schematically shows a flow chart of a method for virtual security inspection according to exemplary embodiments of the present invention; and
Fig. 7 schematically shows a block diagram of a virtual security inspection machine according to exemplary embodiments of the present invention.

### DETAILED DESCRIPTION

The exemplary implementations of the present disclosure will now be described more fully with reference to the accompanying drawings. However, the exemplary implementations can be implemented in various forms and should not be understood as being limited to the embodiments set forth herein; instead, these implementations are provided so that this disclosure will be thorough and complete, and the conception of exemplary implementations will be fully conveyed to those skilled in the art. The described features, structures or characteristics may be combined in one or more implementations in any suitable manner. In the following description, numerous specific details are provided so as to allow a full understanding of the implementations of the present disclosure. However, those skilled in the art will recognize that the technical solutions of the present disclosure may be practiced without one or more of the specific details; or other methods, components, devices, steps and so on may be used. In other cases, well-known technical solutions are not shown or described in detail to avoid obscuring various aspects of the present disclosure.

In addition, the drawings are merely illustrative of the present disclosure and are not necessarily draw to scale. In the drawings, the same reference signs denote the same or similar parts, thus their detailed description will be omitted. Some block diagrams shown in the drawings are only functional entities and do not necessarily have to correspond to physical or logical separate entities. These functional entities may be implemented in software, or these functional entities may be implemented in one or more hardware modules, or these functional entities may be implemented in different networks and/or processor devices and/or microcontroller devices.

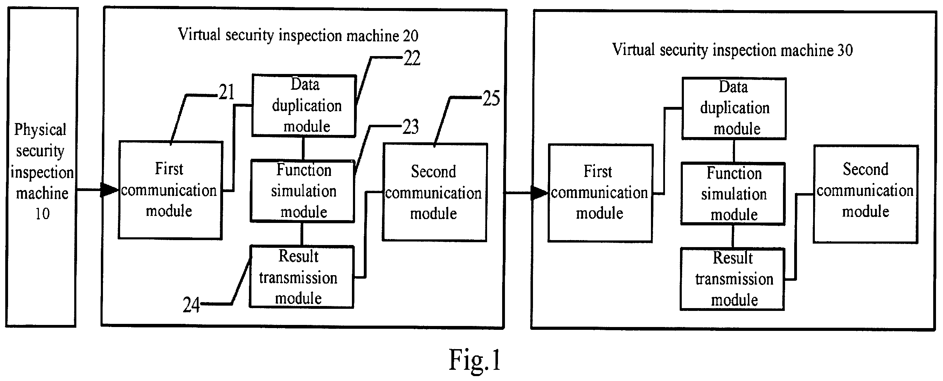

The present exemplary implementation provides a virtual security inspection machine. Referring to Fig. 1, the virtual security inspection machine may include a first communication module 21, a data duplication module 22, a function simulation module 23, a result transmission module 24 and a second communication module 25. The virtual security inspection machine may further include other parts, such as a display module, an input module and a power supply module, which is not particularly limited in the present exemplary implementation.

The first communication module 21 is configured to establish a first communication link with a security inspection machine.

In the present exemplary implementation, the security inspection machine may be a physical security inspection machine or a virtual security inspection machine. For example, a first communication module 21 of a virtual security inspection machine 20 in Fig. 1 may establish a first communication link with a physical security inspection machine 10. A first communication module of a virtual security inspection machine 30 in Fig. 1 may establish a first communication link with the virtual security inspection machine 20. The first communication module 21 may establish the first communication link with the security inspection machine through wired communication modes, such as a network cable, a serial port or the like, or through wireless communication modes, such as ZigBee, WiFi, Bluetooth or the like, which is not particularly limited in the present exemplary embodiment.

The data duplication module 22 is configured to acquire and duplicate security inspection data from the security inspection machine in real time through the first communication link.

Referring to Fig. 1, the virtual security inspection machine 20 coupled with the physical security inspection machine 10 may acquire and duplicate security inspection data from the physical security inspection machine 10 in real time through one first communication link by the data duplication module 22. The virtual security inspection machine 30 connected with the virtual security inspection machine 20 may acquire and duplicate the security inspection data from the virtual security inspection machine 20 in real time through another one first communication link. In the present exemplary implementation, the security inspection data may include a state of the physical security inspection machine and image data acquired by the physical security inspection machine, such as operating state parameters of the physical security inspection machine and acquired X-ray scanning images. However, in other exemplary embodiments of the present disclosure, the security inspection data may further include other data as needed, which is not limited to the manner enumerated in the present exemplary implementation.

The function simulation module 23 is configured to simulate a virtual security inspection unit having a characteristic of a physical security inspection machine and load the security inspection data duplicated by the data duplication module 22 into the virtual security inspection unit.

For example, the virtual security inspection unit simulated by the function simulation module 23 in the present exemplary implementation may include characteristics of the physical security inspection machine, such as a device identification of the physical security inspection machine, a channel size, a resolution, state control function such as on/off, a single/dual channel detection function, a transport carrying manner and so on. It will be readily understood by those skilled in the art that, the virtual security inspection unit described in the present exemplary implementation may correspond to the physical security inspection machine, or be different from the physical security inspection machine to some extent. After the simulated virtual security inspection unit loads the security inspection data duplicated by the data duplication module 22, detection situations of the physical security inspection machine may be restored in real time.

The second communication module 25 is configured to establish a second communication link with a business process mechanism.

In the present exemplary implementation, the business process mechanism may include, for example, a transport control mechanism, an alarm mechanism, or the like. However, in other exemplary embodiments of the present disclosure, for example, the business process mechanism may further be other components, persons or departments that specifically perform a particular process. The second communication module 25 may establish the second communication link with the security inspection machine through wired communication modes, such as a network cable, a serial port or the like, or through wireless communication modes, such as ZigBee, WiFi, Bluetooth or the like, which is not particularly limited in the present exemplary embodiment.

The result transmission module 24 is configured to transmit a security inspection result of the virtual security inspection unit to the business process mechanism through the second communication link.

In the present exemplary implementation, the virtual security inspection unit may display a part or all of the above security inspection data to the security inspector for judging images. The virtual security inspection unit may receive a security inspection result input by the security inspector after he/she judges the images. As the physical security inspection machine, the virtual security inspection machine may transmit the security inspection result to the business process mechanism, such that the business process mechanism may continue following processes. For example, the transport control mechanism may control whether to continue transmitting a detected object or transmitting the detected object to a preset destination based on the security inspection result. The alarm mechanism may determine whether to trigger an alarm or not, and the like, based on the security inspection result.

In the following, more detailed illustrations are given in combination with a security inspection system which uses the above virtual security inspection machine described in the present exemplary implementation.

The security inspection system provided in the present exemplary implementation may include at least one physical security inspection machine and at least one of the virtual security inspection machines described above. As shown in Fig. 1, the respective virtual security inspection machines may be coupled with the physical security inspection machine or another virtual security inspection machine. Therefore, in the security inspection system, the physical security inspection machine and the virtual security inspection machine may have various topologies.

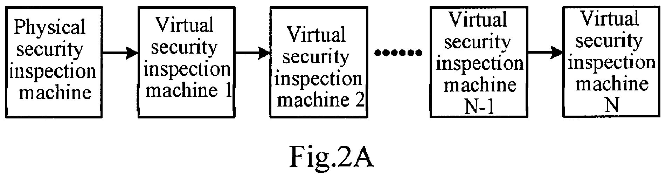

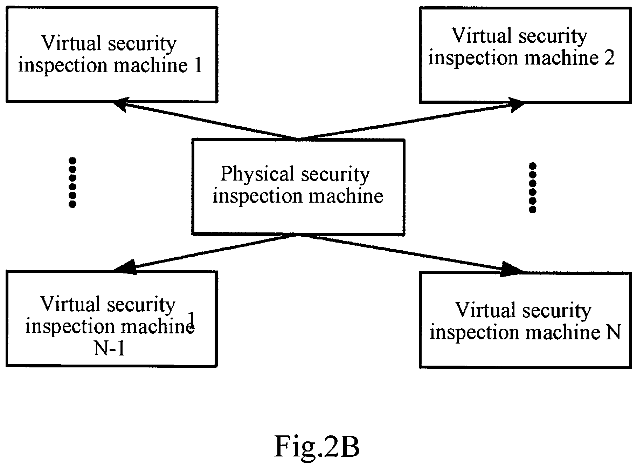

For example, referring to Fig. 2A, the security inspection system may include one physical security inspection machine and N virtual security inspection machines, wherein a m^{th} virtual security inspection machine is coupled with a (m-1)^{th} virtual security inspection machine, a first virtual security inspection machine is coupled with the physical security inspection machine, 2≤N and 1<m≤N. That is, the physical security inspection machine and the virtual security inspection machines are coupled in a series manner. As an another example, referring to Fig. 2B, the security inspection system may include one physical security inspection machine and N virtual security inspection machines, wherein each of the virtual security inspection machines is coupled with the physical security inspection machine. That is, the physical security inspection machine and the virtual security inspection machines are coupled in a parallel manner. It will be readily understood that, in other exemplary embodiments of the present disclosure, the security inspection system may further be in other topologies, which is not particularly limited in this exemplary implementation.

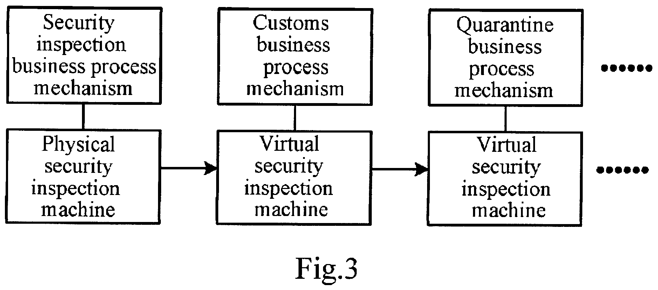

Referring to Fig. 3, in the present exemplary implementation, each of the virtual security inspection machines in the security inspection system may be correspondingly provided to different security inspection departments.

For example, in the present exemplary implementation, the respective virtual security inspection machines may be correspondingly provided to a security inspection department, an inspection and quarantine department, a customs department, and so on. Each department may independently carry out their own security inspection process, without being interfered by security inspection processes of other departments. Since each department may correspond to a separate physical security inspection machine or a separate virtual security inspection machine, one security inspection data image of each security inspection machine only corresponds to one image judging conclusion, which avoids merging image judging conclusions of several departments and processes for conflicting, thus the processing flow may be simplified. Meanwhile, because the process for each department is independent, the process of custom development may be avoided, the security inspection system may be reused, the process of increasing or reducing collaborative departments may be achieved simply, and it may easily support collaborative image judgment of a plurality of departments and a dynamic extension of remote monitoring.

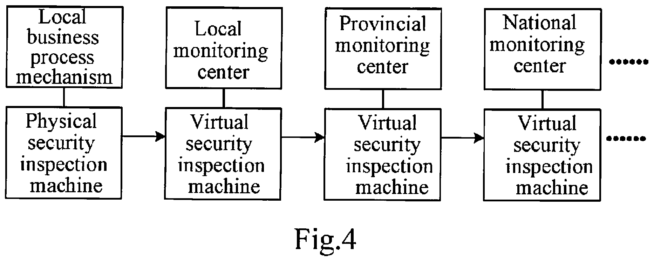

Referring to Fig. 4, in the present exemplary implementation, the respective virtual security inspection machines in the security inspection system may be correspondingly provided to different levels of monitoring centers.

For example, in the present exemplary implementation, the respective virtual security inspection machines may be correspondingly provided to a local business process mechanism, a local monitoring center, a provincial monitoring center, a national monitoring center and so on, thereby supporting a remote multi-level supervision of the states of the security inspection machine and security inspection images.

In the prior art, for a situation where the remote multi-level supervision is needed for the states of the security inspection machine and security inspection images, a large amount of adjustments and modifications must be carried out. Both a local image judging and a remote image judging of centralized management generally work in local area network environment, such that, in order to achieve multi-level monitoring and even national networking functions, the network must be modified heavily, and monitoring processes may affect and interfere a normal working procedure of the security inspection machine.

However, in the present exemplary embodiment, since the virtual security inspection machine in the security inspection system as shown in Fig. 4 acquires the images and the state information of the security inspection machine in real time by monitoring data such as the states of the entity security inspection machine, the images from the entity security inspection machine or the like. The virtual security inspection machine simulates behavior of the actual security inspection machine, independently providing duplication of the data of the physical security inspection machine to outside. The respective levels of monitoring centers do not directly monitor the physical security inspection machine, but monitor the virtual security inspection machines that fully duplicate the security inspection data of the physical security inspection machine. Thus, the virtual security inspection machines may be looked as actual devices, integration may be performed using a consistent approach, which may simplify network reconstruction. At the same time, for remote supervision, the virtual security inspection machine duplicates the behavior of the physical security inspection machine, which may guarantee the accuracy of supervising data. Moreover, due to consistency and independence of monitoring data of the respective levels of monitoring centers, the situation where multi-level monitoring affects the field security inspection process may be avoided. In addition, in the present example implementation, behavior interfaces of the virtual security inspection machine and the physical security inspection machine may be consistent, thereby the integration of multi-process and multi-level supervision may be simplified, and extension and reconstruction may be facilitated.

Further, in the prior art, if there are a plurality of types of security inspection machines, when the centralized management service is performed, the centralized management service must be modified to be compatible with various models and types of security inspection machines., therefore the development is difficult. Furthermore, when kind and number of the security inspection machine are altered, the centralized management service must to be modified, thus extension is difficult.

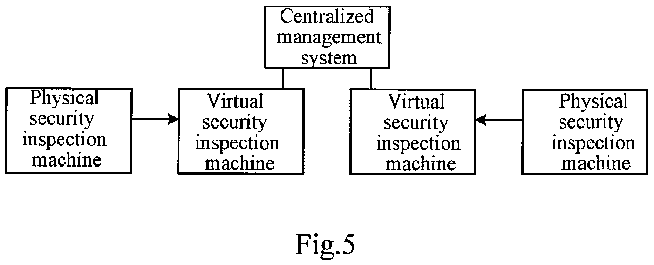

In the present exemplary implementation, the virtual security inspection machine may further include an interface module. The interface module is configured to provide a preset type of interface to outside. For example, in the present example implementation, interface modules of the respective virtual security inspection machines may provide a uniform type of interface to outside. Referring to Fig. 5, the security inspection system may further include a centralized management system, which may conduct management service on the respective virtual security inspection machines through the uniform type of interface.

In the example implementation, the interface module of the virtual security inspection machine may further facilitate the integration of security inspection machines of different manufacturers, different types or different interfaces. The field which has used devices of other manufacturers may be upgraded and reconstructed by a whole scheme, without replacing any original security inspection machine. Specifically, the integrated interface of the physical security inspection machines may be closed through the modification of the virtual security inspection machines. A uniform external interface is provided by the virtual security inspection machine, so as to achieve the interface standardization of the virtual security inspection machine, which facilitates the integration of different devices, such that the alteration of the type and number of devices will not affect the centralized management service. Since the interface module of the virtual security inspection machine only needs to modify its interface provided outside, which reduces development difficulty and improves system extensibility.

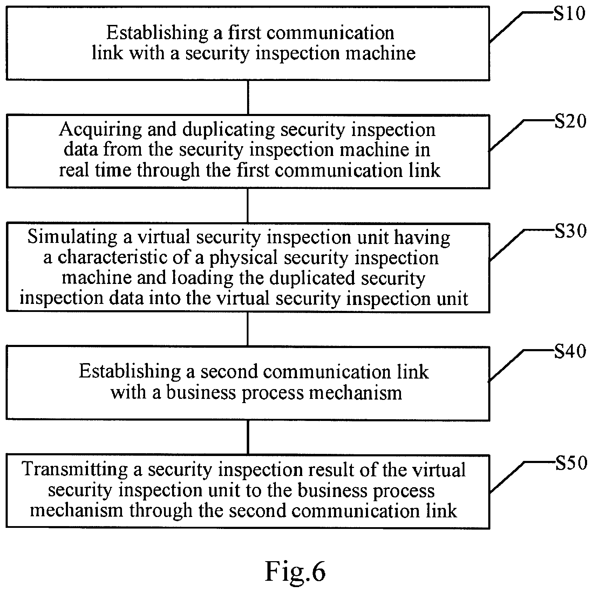

Further, the present exemplary implementation further provides a method for virtual security inspection. Referring to Fig. 6, in the present exemplary implementation, the method for virtual security inspection may include:
Step S10: establishing a first communication link with a security inspection machine;
Step S20: acquiring and duplicating security inspection data from the security inspection machine in real time through the first communication link;
Step S30: simulating a virtual security inspection unit having a characteristic of a physical security inspection machine and loading the duplicated security inspection data into the virtual security inspection unit;
Step S40: establishing a second communication link with a business process mechanism; and
Step S50: transmitting a security inspection result of the virtual security inspection unit to the business process mechanism through the second communication link.

The details of the steps in the above-mentioned method for virtual security inspection have been described in detail in the corresponding virtual security inspection machine, which will not be detailed herein.

It should be noted that although several modules or units of the device for action execution are mentioned in the above detailed description, such division is not mandatory. In fact, according to implementations of the present disclosure, the features and functions of two or more modules or units described above may be embodied in a module or unit. On the contrary, the features and functions of a module or unit described above may be further divided into a plurality of modules or units.

In addition, although various steps of the method of the present disclosure have been described in a particular order in the drawings, it is not intended or implied that such steps must be performed in the particular order, or that all of the steps shown must be performed to achieve a desired result. Additionally or optionally, some steps may be omitted, some steps may be combined into one step, and/or a step may be decomposed into a plurality of steps.

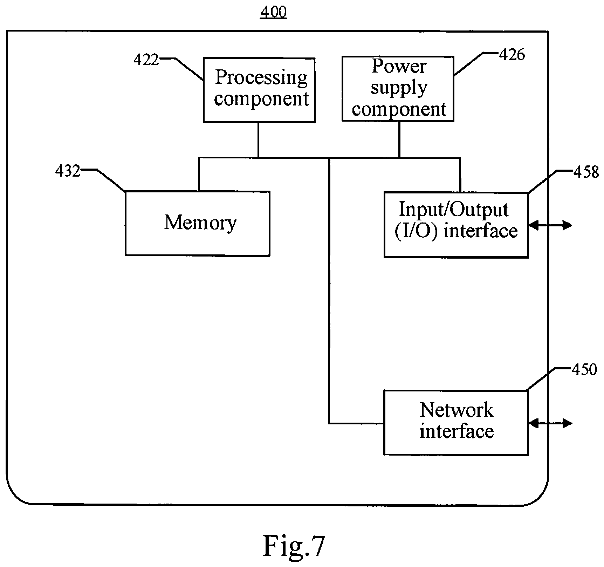

Fig. 7 is a schematic diagram of the above-described virtual security inspection machine 400 according to an exemplary implementation of the present disclosure. Referring to Fig. 7, the virtual security inspection machine 400 includes a processing component 422 which further includes one or more processors, as well as memory resources represented by a memory 432 for storing instructions executed by the processing component 422, such as an application program. The application program stored in the memory 432 may include one or more modules, each corresponding to a set of instructions. In addition, the processing component 422 is configured to execute instructions to perform the method described above.

The virtual security inspection machine 400 may further include a power supply component 426 configured to perform power management of the virtual security inspection machine 400, a wired or wireless network interface 450 configured to connect the virtual security inspection machine 400 to the network, and an input/output (I/O) interface 458. The virtual security inspection machine 400 may operate an operating system stored in the memory 432, such as Windows Server™, Mac OS X™, Unix™, Linux™, FreeBSD™ or the like.

Other embodiments of the present disclosure will be readily apparent to those skilled in the art upon consideration of the specification and practice of the disclosure disclosed herein.

## Claims

1. A virtual security inspection machine (20, 30, 1, 2), which simulates a physical security inspection machine (10), wherein the physical security inspection machine (10) is a machine which is used at airports, railway stations, bus stations, government buildings, embassies, convention centers, exhibition centers, hotels, shopping malls, large-scale activities, post offices, schools, logistics business or industrial detecting places, so as to check carry-on baggage or verify identities of people, the virtual security inspection machine (20, 30, 1, 2) simulates characteristics of the physical security inspection machine (10) comprising a device identification, a channel size, a resolution, a state control function of on/off, a single/dual channel detection function or a transport carrying manner of the physical security inspection machine (10), and the virtual security inspection machine (20, 30, 1, 2) comprises:
a first communication module (21), configured to establish a first communication link with a virtual or physical security inspection machine (10);
a data duplication module (22), configured to acquire security inspection data from the other virtual security inspection machine or the physical security inspection machine (10) in real time through the first communication link.
and duplicate the security inspection data;
a function simulation module (23), configured to simulate a characteristic of the physical security inspection machine (10) and load the security inspection data duplicated by the data duplication module (22);
a second communication module (25), configured to establish a second communication link with a virtual security inspection machine or a process mechanism, wherein the process mechanism comprises a transport control mechanism, an alarm mechanism, or components, persons or departments that specifically perform a process; and
a result transmission module (24), configured to transmit a security inspection result of the virtual security inspection machine (20, 30, 1, 2) to a virtual security inspection machine or the process mechanism through the
second communication link.

2. The virtual security inspection machine of claim 1, wherein
the first communication module (21) is configured to establish the first communication link with a physical security inspection machine (10); and
the data duplication module (22) is configured to acquire and duplicate the security inspection data from the physical security inspection machine (10) in real time through the first communication link.

3. The virtual security inspection machine according to claim 1, wherein
the first communication module (21) is configured to establish the first communication link with another virtual security inspection machine (20, 30, 1, 2); and
the data duplication module (22) is configured to acquire and duplicate the security inspection data from the another virtual security inspection machine (20, 30, 1, 2) in real time through the first communication link.

4. The virtual security inspection machine according to claim 1, wherein the security inspection data comprises a state of the physical security inspection machine (10) and image data acquired by the physical security inspection machine (10).

5. The virtual security inspection machine according to any one of claims 1 to 4, further comprising:
an interface module, configured to provide a preset type of interface to outside.

6. A security inspection system, comprising:
at least one physical security inspection machine (10); and
at least one of the virtual security inspection machines (20, 30, 1, 2) according to any one of claims 1 to 5, wherein the respective virtual security inspection machines (20, 30, 1, 2) are coupled with the physical security inspection machine (10) or another virtual security inspection machine (20, 30, 1, 2).

7. The security inspection system according to claim 6, wherein
the security inspection system comprises one physical security inspection machine (10) and N virtual security inspection machines (20, 30, 1, 2), a m^{th} virtual security inspection machine is coupled with a (m-1)^{th} virtual security inspection machine, a first virtual security inspection machine is coupled with the physical security inspection machine, 2≤N and 1<m≤N.

8. The security inspection system according to claim 6, wherein
the security inspection system comprises a physical security inspection machine (10) and a plurality of virtual security inspection machines (20, 30, 1, 2), and each of the virtual security inspection machines (20, 30, 1, 2) is coupled with the physical security inspection machine (10).

9. The security inspection system according to any one of claims 6 to 8, wherein the respective virtual security inspection machines (20, 30, 1, 2) are correspondingly provided to different classes of security inspection departments.

10. The security inspection system according to any one of claims 6 to 8, wherein the respective virtual security inspection machines (20, 30, 1, 2) are correspondingly provided to different levels of monitoring centers.

11. The security inspection system according to any one of claims 6 to 8, wherein interface modules of the respective virtual security inspection machines (20, 30, 1, 2) provide a uniform type of interface to outside.

12. The security inspection system according to claim 11, further comprising:
a centralized management system, configured to conduct management service on the respective virtual security inspection machines (20, 30, 1, 2) through the uniform type of interface.

13. A method for virtual security inspection for simulating a physical security inspection machine, wherein the physical security inspection machine (10) is a machine which is used at airports, railway stations, bus stations, government buildings, embassies, convention centers, exhibition centers, hotels, shopping malls, large-scale activities, post offices, schools, logistics business or industrial detecting places, so as to check carry-on baggage or verify identities of people, the virtual security inspection machine (20, 30, 1, 2) simulates characteristics of the physical security inspection machine (10) comprising a device identification, a channel size, a resolution, a state control function of on/off, a single/dual channel detection function or a transport carrying manner of the physical security inspection machine (10), and the virtual security inspection machine (20, 30, 1, 2), the method comprising:
establishing (S10) a first communication link with a virtual or physical physical security inspection machine (10);
acquiring (S20) security inspection data from the other virtual or the physical security inspection machine in real
time through the first communication link, and duplicating the security inspection data; simulating (S30) a a characteristic of the physical security inspection machine (10) and loading the duplicated security inspection data;
establishing (S40) a second communication link with a virtual security inspection machine or a process mechanism, wherein the process mechanism comprises a transport control mechanism, an alarm mechanism, or components, persons or departments that specifically perform a process; and transmitting (S50) a security inspection result of the virtual security inspection machine to the other virtual security inspection machine or the process mechanism through the second communication link.

14. A computer program, which when executing on a processor of a virtual security inspection machine according to any one of claims 1-5, performs a method according to claim 13.

## Patentansprüche

1. Virtuelle Sicherheitsinspektionsmaschine (20, 30, 1, 2), die eine physische Sicherheitsinspektionsmaschine (10) simuliert, wobei die physische Sicherheitsinspektionsmaschine (10) eine Maschine ist, die auf/in Flughäfen, Bahnhöfen, Bushaltestellen, Regierungsgebäuden, Botschaften, Kongresszentren, Ausstellungszentren, Hotels, Einkaufszentren, Großveranstaltungen, Postämtern, Schulen, Logistikunternehmen oder industriellen Nachweisstellen verwendet wird, um Handgepäck zu prüfen oder Identitäten von Personen zu verifizieren, wobei die virtuelle Sicherheitsinspektionsmaschine (20, 30, 1, 2) Eigenschaften der physischen Sicherheitsinspektionsmaschine (10) simuliert, umfassend eine Vorrichtungsidentifizierung, eine Kanalgröße, eine Auflösung, eine Zustandskontrollfunktion von Ein/Aus, eine Single-/Dual-Kanalerfassungsfunktion oder eine Transportweise der physischen Sicherheitsinspektionsmaschine (10), und die virtuelle Sicherheitsinspektionsmaschine (20, 30, 1, 2) umfasst:
ein erstes Kommunikationsmodul (21), das dazu ausgestaltet ist, eine erste Kommunikationsverbindung mit einer virtuellen oder einer physischen Sicherheitsinspektionsmaschine (10) herzustellen,
ein Datenduplikationsmodul (22), das dazu ausgestaltet ist, Sicherheitsinspektionsdaten von der anderen virtuellen Sicherheitsinspektionsmaschine oder der physischen Sicherheitsinspektionsmaschine (10) in Echtzeit durch die erste Kommunikationsverbindung zu erwerben und die Sicherheitsinspektionsdaten zu duplizieren,
ein Funktionssimulationsmodul (23), das dazu ausgestaltet ist, eine Eigenschaft der physischen Sicherheitsinspektionsmaschine (10) zu simulieren und die durch das Datenduplikationsmodul (22) duplizierten Sicherheitsinspektionsdaten zu laden,
ein zweites Kommunikationsmodul (25), das dazu ausgestaltet ist, eine zweite Kommunikationsverbindung mit einer virtuellen Sicherheitsinspektionsmaschine oder einem Prozessmechanismus herzustellen, wobei der Prozessmechanismus einen Transportkontrollmechanismus, einen Alarmmechanismus oder Komponenten, Personen oder Abteilungen umfasst, die spezifisch einen Prozess durchführen, und
ein Ergebnisübertragungsmodul (24), das dazu ausgestaltet ist, ein Sicherheitsinspektionsergebnis der virtuellen Sicherheitsinspektionsmaschine (20, 30, 1, 2) an eine virtuelle Sicherheitsinspektionsmaschine oder den Prozessmechanismus durch die zweite Kommunikationsverbindung zu übertragen.

2. Virtuelle Sicherheitsinspektionsmaschine nach Anspruch 1, wobei
das erste Kommunikationsmodul (21) dazu ausgestaltet ist, die erste Kommunikationsverbindung mit einer physischen Sicherheitsinspektionsmaschine (10) herzustellen, und
das Datenduplikationsmodul (22) dazu ausgestaltet ist, die Sicherheitsinspektionsdaten von der physischen Sicherheitsinspektionsmaschine (10) in Echtzeit durch die erste Kommunikationsverbindung zu erwerben und zu duplizieren.

3. Virtuelle Sicherheitsinspektionsmaschine nach Anspruch 1, wobei
das erste Kommunikationsmodul (21) dazu ausgestaltet ist, die erste Kommunikationsverbindung mit einer anderen virtuellen Sicherheitsinspektionsmaschine (20, 30, 1, 2) herzustellen, und
das Datenduplikationsmodul (22) dazu ausgestaltet ist, die Sicherheitsinspektionsdaten von der anderen virtuellen Sicherheitsinspektionsmaschine (20, 30, 1, 2) in Echtzeit durch die erste Kommunikationsverbindung zu erwerben und zu duplizieren.

4. Virtuelle Sicherheitsinspektionsmaschine nach Anspruch 1, wobei die Sicherheitsinspektionsdaten einen Zustand der physischen Sicherheitsinspektionsmaschine (10) und Bilddaten umfassen, die durch die physische Sicherheitsinspektionsmaschine (10) erworben werden.

5. Virtuelle Sicherheitsinspektionsmaschine nach einem der Ansprüche 1 bis 4, ferner umfassend:
ein Schnittstellenmodul, das dazu ausgestaltet ist, eine zuvor festgelegte Art von Schnittstelle nach außen bereitzustellen.

6. Sicherheitsinspektionssystem, umfassend:
mindestens eine physische Sicherheitsinspektionsmaschine (10), und
mindestens eine der virtuellen Sicherheitsinspektionsmaschinen (20, 30, 1, 2) nach einem der Ansprüche 1 bis 5, wobei die jeweiligen virtuellen Sicherheitsinspektionsmaschinen (20, 30, 1, 2) mit der physischen Sicherheitsinspektionsmaschine (10) oder einer anderen virtuellen Sicherheitsinspektionsmaschine (20, 30, 1, 2) gekoppelt sind.

7. Sicherheitsinspektionssystem nach Anspruch 6, wobei
das Sicherheitsinspektionssystem eine physische Sicherheitsinspektionsmaschine (10) und N virtuelle Sicherheitsinspektionsmaschinen (20, 30, 1, 2) umfasst, eine m-te virtuelle Sicherheitsinspektionsmaschine mit einer (m-1)-ten virtuellen Sicherheitsinspektionsmaschine gekoppelt ist, eine erste virtuelle Sicherheitsinspektionsmaschine mit der physischen Sicherheitsinspektionsmaschine gekoppelt ist, 2≤N und 1<m≤N.

8. Sicherheitsinspektionssystem nach Anspruch 6, wobei
das Sicherheitsinspektionssystem eine physische Sicherheitsinspektionsmaschine (10) und mehrere virtuelle Sicherheitsinspektionsmaschinen (20, 30, 1, 2) umfasst, und jede der virtuellen Sicherheitsinspektionsmaschinen (20, 30, 1, 2) mit der physischen Sicherheitsinspektionsmaschine (10) gekoppelt ist.

9. Sicherheitsinspektionssystem nach einem der Ansprüche 6 bis 8, wobei die jeweiligen virtuellen Sicherheitsinspektionsmaschinen (20, 30, 1, 2) entsprechend unterschiedlichen Klassen von Sicherheitsinspektionsabteilungen bereitgestellt sind.

10. Sicherheitsinspektionssystem nach einem der Ansprüche 6 bis 8, wobei die jeweiligen virtuellen Sicherheitsinspektionsmaschinen (20, 30, 1, 2) entsprechend unterschiedlichen Stufen von Überwachungszentren bereitgestellt sind.

11. Sicherheitsinspektionssystem nach einem der Ansprüche 6 bis 8, wobei Schnittstellenmodule der jeweiligen virtuellen Sicherheitsinspektionsmaschinen (20, 30, 1, 2) eine einheitliche Art von Schnittstelle nach außen bereitstellen.

12. Sicherheitsinspektionssystem nach Anspruch 11, ferner umfassend:
ein zentralisiertes Verwaltungssystem, das dazu ausgestaltet ist, einen Verwaltungsdienst an den jeweiligen virtuellen Sicherheitsinspektionsmaschinen (20, 30, 1, 2) durch die einheitliche Art von Schnittstelle durchzuführen.

13. Verfahren zur virtuellen Sicherheitsinspektion zum Simulieren einer physischen Sicherheitsinspektionsmaschine, wobei die physische Sicherheitsinspektionsmaschine (10) eine Maschine ist, die auf/in Flughäfen, Bahnhöfen, Bushaltestellen, Regierungsgebäuden, Botschaften, Kongresszentren, Ausstellungszentren, Hotels, Einkaufszentren, Großveranstaltungen, Postämtern, Schulen, Logistikunternehmen oder industriellen Nachweisstellen verwendet wird, um Handgepäck zu prüfen oder Identitäten von Personen zu verifizieren, wobei die virtuelle Sicherheitsinspektionsmaschine (20, 30, 1, 2) Eigenschaften der physischen Sicherheitsinspektionsmaschine (10) simuliert, umfassend eine Vorrichtungsidentifizierung, eine Kanalgröße, eine Auflösung, eine Zustandskontrollfunktion von Ein/Aus, eine Single-/Dual-Kanalerfassungsfunktion oder eine Transportweise der physischen Sicherheitsinspektionsmaschine (10), und die virtuelle Sicherheitsinspektionsmaschine (20, 30, 1, 2), wobei das Verfahren umfasst:
Herstellen (S10) einer ersten Kommunikationsverbindung mit einer virtuellen oder physischen Sicherheitsinspektionsmaschine (10),
Erwerben (S20) von Sicherheitsinspektionsdaten von der anderen virtuellen oder der physischen Sicherheitsinspektionsmaschine in Echtzeit durch die erste Kommunikationsverbindung und Duplizieren der Sicherheitsinspektionsdaten,
Simulieren (S30) einer Eigenschaft der physischen Sicherheitsinspektionsmaschine (10) und Laden der duplizierten Sicherheitsinspektionsdaten,
Herstellen (S40) einer zweiten Kommunikationsverbindung mit einer virtuellen Sicherheitsinspektionsmaschine oder einem Prozessmechanismus, wobei der Prozessmechanismus einen Transportkontrollmechanismus, einen Alarmmechanismus oder Komponenten, Personen oder Abteilungen umfasst, die spezifisch einen Prozess durchführen, und
Übertragen (S50) eines Sicherheitsinspektionsergebnisses der virtuellen Sicherheitsinspektionsmaschine an die andere virtuelle Sicherheitsinspektionsmaschine oder den Prozessmechanismus durch die zweite Kommunikationsverbindung.

14. Computerprogramm, das, wenn es auf einem Prozessor einer virtuellen Sicherheitsinspektionsmaschine nach einem der Ansprüche 1-5 ausgeführt wird, ein Verfahren nach Anspruch 13 durchführt.

## Revendications

1. Machine d'inspection de sécurité virtuelle (20, 30, 1, 2), qui simule une machine d'inspection de sécurité physique (10), dans laquelle la machine d'inspection de sécurité physique (10) est une machine qui est utilisée dans les aéroports, les gares ferroviaires, les gares routières, les bâtiments gouvernementaux, les ambassades, les centres de congrès, les centres d'exposition, les hôtels, les centres commerciaux, les activités à grande échelle, les bureaux de poste, les écoles, les entreprises de logistique ou les lieux de détection industriels, de façon à contrôler les bagages à main ou vérifier les identités de personnes, la machine d'inspection de sécurité virtuelle (20, 30, 1, 2) simule les caractéristiques de la machine d'inspection de sécurité physique (10) comprenant une identification de dispositif, une taille de canal, une résolution, une fonction de commande d'état de marche/d'arrêt, une fonction de détection de canal simple/double ou un mode de transport d'acheminement de la machine d'inspection de sécurité physique (10), et la machine d'inspection de sécurité virtuelle (20, 30, 1, 2) comprend :
un premier module de communication (21), configuré pour établir une première liaison de communication avec une machine d'inspection de sécurité virtuelle ou physique (10) ;
un module de duplication de données (22), configuré pour acquérir des données d'inspection de sécurité à partir de l'autre machine d'inspection de sécurité virtuelle ou de la machine d'inspection de sécurité physique (10) en temps réel au travers de la première liaison de communication et dupliquer les données d'inspection de sécurité ;
un module de simulation de fonction (23), configuré pour simuler une caractéristique de la machine d'inspection de sécurité physique (10) et charger les données d'inspection de sécurité dupliquées par le module de duplication de données (22) ;
un second module de communication (25), configuré pour établir une seconde liaison de communication avec une machine d'inspection de sécurité virtuelle ou un mécanisme de traitement, dans lequel le mécanisme de traitement comprend un mécanisme de commande d'acheminement, un mécanisme d'alarme, ou des composants, des personnes ou des administrations qui réalisent spécifiquement un traitement ; et
un module de transmission de résultat (24), configuré pour transmettre un résultat d'inspection de sécurité de la machine d'inspection de sécurité virtuelle (20, 30, 1, 2) à une machine d'inspection de sécurité virtuelle ou au mécanisme de traitement au travers de la seconde liaison de communication.

2. Machine d'inspection de sécurité virtuelle selon la revendication 1, dans laquelle
le premier module de communication (21) est configuré pour établir la première liaison de communication avec une machine d'inspection de sécurité physique (10) ; et
le module de duplication de données (22) est configuré pour acquérir et dupliquer les données d'inspection de sécurité à partir de la machine d'inspection de sécurité physique (10) en temps réel au travers de la première liaison de communication.

3. Machine d'inspection de sécurité virtuelle selon la revendication 1, dans laquelle
le premier module de communication (21) est configuré pour établir la première liaison de communication avec une autre machine d'inspection de sécurité virtuelle (20, 30, 1, 2) ; et
le module de duplication de données (22) est configuré pour acquérir et dupliquer les données d'inspection de sécurité à partir de l'autre machine d'inspection de sécurité virtuelle (20, 30, 1, 2) en temps réel au travers de la première liaison de communication.

4. Machine d'inspection de sécurité virtuelle selon la revendication 1, dans laquelle les données d'inspection de sécurité comprennent un état de la machine d'inspection de sécurité physique (10) et des données d'image acquises par la machine d'inspection de sécurité physique (10).

5. Machine d'inspection de sécurité virtuelle selon l'une quelconque des revendications 1 à 4, comprenant en outre :
un module d'interface, configuré pour fournir un type prédéfini d'interface avec l'extérieur.

6. Système d'inspection de sécurité, comprenant :
au moins une machine d'inspection de sécurité physique (10) ;
et
au moins l'une des machines d'inspection de sécurité virtuelles (20, 30, 1, 2) selon l'une quelconque des revendications 1 à 5, dans lequel les machines d'inspection de sécurité virtuelles respectives (20, 30, 1, 2) sont couplées à la machine d'inspection de sécurité physique (10) ou à une autre machine d'inspection de sécurité virtuelle (20, 30, 1, 2).

7. Système d'inspection de sécurité selon la revendication 6, dans lequel
le système d'inspection de sécurité comprend une machine d'inspection de sécurité physique (10) et N machines d'inspection de sécurité virtuelles (20, 30, 1, 2), une m-ième machine d'inspection de sécurité virtuelle est couplée à une (m-1)-ième machine d'inspection de sécurité virtuelle, une première machine d'inspection de sécurité virtuelle est couplée à la machine d'inspection de sécurité physique, 2 ≤ N et 1 < m ≤ N.

8. Système d'inspection de sécurité selon la revendication 6, dans lequel
le système d'inspection de sécurité comprend une machine d'inspection de sécurité physique (10) et une pluralité de machines d'inspection de sécurité virtuelles (20, 30, 1, 2), et chacune des machines d'inspection de sécurité virtuelles (20, 30, 1, 2) est couplée à la machine d'inspection de sécurité physique (10).

9. Système d'inspection de sécurité selon l'une quelconque des revendications 6 à 8, dans lequel les machines d'inspection de sécurité virtuelles respectives (20, 30, 1, 2) sont fournies de manière correspondante à différentes classes d'administrations d'inspection de sécurité.

10. Système d'inspection de sécurité selon l'une quelconque des revendications 6 à 8, dans lequel les machines d'inspection de sécurité virtuelles respectives (20, 30, 1, 2) sont fournies de manière correspondante à différents niveaux de centres de surveillance.

11. Système d'inspection de sécurité selon l'une quelconque des revendications 6 à 8, dans lequel les modules d'interface des machines d'inspection de sécurité virtuelles respectives (20, 30, 1, 2) fournissent un type uniforme d'interface avec l'extérieur.

12. Système d'inspection de sécurité selon la revendication 11, comprenant en outre :
un système de gestion centralisé, configuré pour exécuter un service de gestion sur les machines d'inspection de sécurité virtuelles respectives (20, 30, 1, 2) au travers du type uniforme d'interface.

13. Procédé d'inspection de sécurité virtuelle pour la simulation d'une machine d'inspection de sécurité physique, dans lequel la machine d'inspection de sécurité physique (10) est une machine qui est utilisée dans les aéroports, les gares ferroviaires, les gares routières, les bâtiments gouvernementaux, les ambassades, les centres de congrès, les centres d'exposition, les hôtels, les centres commerciaux, les activités à grande échelle, les bureaux de poste, les écoles, les entreprises de logistique ou les lieux de détection industriels, de façon à contrôler les bagages à main ou vérifier les identités de personnes, la machine d'inspection de sécurité virtuelle (20, 30, 1, 2) simule les caractéristiques de la machine d'inspection de sécurité physique (10) comprenant une identification de dispositif, une taille de canal, une résolution, une fonction de commande d'état de marche/d'arrêt, une fonction de détection de canal simple/double ou un mode de transport d'acheminement de la machine d'inspection de sécurité physique (10), et la machine d'inspection de sécurité virtuelle (20, 30, 1, 2), le procédé comprenant :
l'établissement (S10) d'une première liaison de communication avec une machine d'inspection de sécurité virtuelle ou physique (10) ;
l'acquisition (S20) de données d'inspection de sécurité à partir de l'autre machine d'inspection de sécurité virtuelle ou physique en temps réel au travers de la première liaison de communication, et la duplication des données d'inspection de sécurité ;
la simulation (S30) d'une caractéristique de la machine d'inspection de sécurité physique (10) et le chargement des données d'inspection de sécurité dupliquées ;
l'établissement (S40) d'une seconde liaison de communication avec une machine d'inspection de sécurité virtuelle ou un mécanisme de traitement, dans lequel le mécanisme de traitement comprend un mécanisme de commande d'acheminement, un mécanisme d'alarme, ou des composants, des personnes ou des administrations qui réalisent spécifiquement un traitement ; et
la transmission (S50) d'un résultat d'inspection de sécurité de la machine d'inspection de sécurité virtuelle à l'autre machine d'inspection de sécurité virtuelle ou au mécanisme de traitement au travers de la seconde liaison de communication.

14. Programme d'ordinateur, qui lorsqu'il est exécuté sur un processeur d'une machine d'inspection de sécurité virtuelle selon l'une quelconque des revendications 1 à 5, réalise un procédé selon la revendication 13.
